# EUROPÄISCHE PATENTANMELDUNG

(11) **EP 2 436 651 A1**
(43) Veröffentlichungstag der Anmeldung: **04.04.2012**
(21) Anmeldenummer: 11178636.4
(22) Anmeldetag: 24.08.2011
(51) Int. Cl.: C02F 1/00, C02F 1/44, C02F 1/78, B01D 61/22

(54) **Verfahren und Produktionsanlage zum Herstellen von Sterilwasser**

(30) Priorität: 30.09.2010 DE 102010041827
(71) Anmelder: Krones AG, 93073 Neutraubling (DE)
(72) Erfinder: Zacharias, Jörg, 93096 Köfering (DE)
(74) Vertreter: Grünecker, Kinkeldey, Stockmair & Schwanhäusser

(57) **Zusammenfassung**

Bei einem Verfahren zum Herstellen von Sterilwasser aus Rohwasser während eines Produktionszyklus in einer Produktionsanlage P wird während des Produktionszyklus zur permanenten Sterilwasser- und/oder Produktionsanlagen-Zustandsüberwachung dem produzierten Sterilwasser ein Desinfektionsmittel D zugegeben und direkt im Produktionsstrom 15 eine Konzentrationsabnahme des Desinfektionsmittels ermittelt und ausgewertet. In einer zum Durchführen des Verfahrens geeigneten Produktionsanlage P ist direkt im Produktionsstrom 15 ein Steril-Sensor 7 vorgesehen, mit dem permanent die Konzentrationsabnahme des dem produzierten Sterilwasser zugesetzten Desinfektionsmittels D messbar und zum Erbringen eines Sterilitätsnachweises auswertbar ist.

## Beschreibung

Die Erfindung betrifft ein Verfahren gemäß Oberbegriff des Patentanspruchs 1 sowie eine Produktionsanlage gemäß Oberbegriff des Patentanspruchs 11.

Sterilwasser, insbesondere zum Verbrauch bei der Getränkeherstellung, in der Abfülltechnik, für Reinigungsanlagen oder in der Verpackungstechnik, wird üblicherweise in sogenannten UHT-Produktionsanlagen durch Erhitzen hergestellt. Die Temperaturüberwachung der Produktionsanlage liefert permanent einen Integritätsnachweis, um ausschließen zu können, dass kontaminiertes Sterilwasser zum Verbrauch freigegeben wird. Jedoch sind UHT-Produktanlagen technisch aufwändig und teuer und erfordert der Betrieb sehr hohen Energieeinsatz.

Als Alternative zur UHT-Technologie bieten sich erhitzungsfrei betriebene Produktionsanlagen an, wie beispielsweise Ultrafiltrationsanlagen mit mindestens einer Membraneinheit, wobei aus dem Rohwasser durch extrem kleine Poren Mikroorganismen und Keime ausgetragen werden. Die Ultrafiltration erfordert für jede Membraneinheit regelmäßige Rückspülzyklen, wobei jeweils zwei aufeinanderfolgende Rückspülzyklen einen Produktionszyklus zeitlich begrenzen. Es wird zwar meist in Verbindung mit jedem Rückspülzyklus ein Integritätstest ausgeführt, der sicherstellt, dass am Beginn eines Produktionszyklus die Membranen ordnungsgemäß filtrieren. Jedoch ist dadurch ein Unsicherheitsfaktor hinsichtlich der Sterilität gegeben, dass während des Produktionszyklus auftretende Funktionsstörungen, wie beispielsweise ein Membranenbruch oder das Loslösen eines Keimnestes nicht detektiert werden und somit kontaminiertes Sterilwasser zum Verbrauch freigegeben werden kann.

Aus FR 2928366 A ist eine Produktionsanlage zum Herstellen von Trinkwasser aus verschmutztem Wasser bekannt, in der das Wasser durch mehrere parallele Filtereinheiten gepumpt wird, dem verschmutzten Wasser in einem die Filtereinheiten enthaltenden Reaktor Ozon als Desinfektionsmittel zugesetzt wird, und stromab der Filtereinheiten mit einem Qualitätssensor die Qualität des Trinkwassers überprüft wird, ehe dies über zwei in Reihe geschaltete Zwischenspeicher zum Verbrauch freigegeben wird. Im ersten Zwischenspeicher wird Trinkwasser für Rückspülzyklen bereitgehalten. Die Zugabe des Ozons wird nach der ermittelten Qualität des Trinkwassers verändert. Abhängig vom Messresultat des Qualitätssensors wird entschieden, ob das Trinkwasser einer Nachbehandlung unterworfen wird. Nur im Reaktor sind Sensoren zum Ermitteln der Konzentration des Ozons enthalten.

Aus US 5,607,593 A ist eine Produktionsanlage zum Herstellen von Trinkwasser bekannt, wobei das Rohwasser, z. B. Flusswasser, durch Membraneinheiten gepumpt wird und in den Membraneinheiten Ozon als Desinfektionsmittel zugegeben wird. Es werden zwar Integritättests nach den Produktionszyklen der Membraneinheiten durchgeführt. Falls jedoch ein Membranenbruch während eines Produktionszyklus einer Membraneinheit auftreten oder sich ein Keimnest auflösen sollte, kommt kontaminiertes Trinkwasser zum Verbrauch.

Da in beiden vorerwähnten Produktionsanlagen das Desinfektionsmittel durch die Membraneinheiten gepumpt wird, müssen ferner gegen das Desinfektionsmittel resistente Membranen verwendet werden.

Der Erfindung liegt die Aufgabe zugrunde, ein Verfahren der eingangs genannten Art sowie eine Produktionsanlage zum Durchführen des Verfahrens anzugeben, mit denen eine erhöhte Betriebssicherheit gewährleistet wird, dass auf prozesstechnisch einfache Weise zum Verbrauch kommendes Sterilwasser tatsächlich steril ist.

Die gestellte Aufgabe wird mit den Merkmalen des Patentanspruchs 1 und des Patentanspruchs 11 gelöst.

Verfahrensgemäß werden erst in das bereits produzierte Sterilwasser, unabhängig davon, ob das produzierte Sterilwasser tatsächlich steril (also keimfrei) oder kontaminiert ist, das Desinfektionsmittel zugegeben und dann direkt im Produktionsstrom die Konzentrationsabnahme des Desinfektionsmittels ermittelt und ausgewertet. Das mindestens eine Desinfektionsmittel wird hierbei nicht zum Desinfizieren des Sterilwassers benutzt, sondern um über die Auswertung der Konzentrationsabnahme im Produktionsstrom herausfinden zu können, ob die Produktionsanlage während eines Produktionszyklus ordnungsgemäß arbeitet oder einer Funktionsstörung unterliegt. Bei ordnungsgemäßer Funktion der Produktionsanlage tritt nämlich ein exakt vorbestimmbarer, relativ geringer Abfall der Konzentration des Desinfektionsmittels auf, während im Falle einer Funktionsstörung aufgrund der Kontamination eine weitaus signifikantere Konzentrationsabnahme als Folge der Zerstörung von Mikroorganismen oder Keimen durch das Desinfektionsmittel entsteht, so dass dann sofortiger Rückschluss auf eine Funktionsstörung möglich und eine Gegenmaßnahme einleitbar sind.

Diese Art, den Sterilitätsnachweis permanent über die Zugabe des Desinfektionsmittels und die Ermittlung und Auswertung der Konzentrationsabnahme durchzuführen, ist speziell zweckmäßig für die Ultrafiltrationstechnologie, deren wesentlicher Vorteil gegenüber UHT-Verfahren darin liegt, mit geringem Energieaufwand Sterilwasser mit hohem Durchsatz herstellen zu lassen, wobei der bisher in Kauf zu nehmenden Nachteil eines während des Produktionszyklus nicht permanent zu erbringenden Sterilitätsnachweises auf einfache Weise beseitigt ist. Das Verfahren ist jedoch auch für solche Produktionsanlagen geeignet, die auf andere Weise erhitzungsfrei betrieben werden, um Sterilwasser herzustellen, denn zum Erbringen des Sterilitätsnachweises wird erst nach der Herstellung von Sterilwasser in dem Produktionsstrom eingegriffen. Andere Technologien können dabei von der Ultrafiltration abweichende Membranverfahren (andere Porengrößen), aber auch andere zur Erhitzung alternative Sterilisationsverfahren wie beispielsweise Hochdruck, Frequenzverfahren oder auch abweichende chemische Verfahren und Kombinationen derer sein. Natürlich funktioniert der Steril-Sensor auch bei jedem mit Hitze betriebenen Verfahren, das anstelle der Ultrafiltration treten kann, beispielsweise bei Mikrowellen oder Hochfrequenzverfahren.

Die Produktionsanlage kann mit hohem Durchsatz betrieben werden, da der Steril-Sensor direkt im Sterilwasser-Produktstrom und permanent einen Sterilitätsnachweis liefert, indem die Reduzierung der für den Sterilitätsnachweis eingebrachten Konzentration des Desinfektionsmittels überwacht wird. Ist die Produktionsanlage insbesondere eine Ultrafiltrationsanlage, mit wenigstens einer Membraneinheit (Membranfiltration), braucht der verwendete Membranentyp nicht resistent gegen das zugegebene Desinfektionsmittel zu sein, da dies zum Zwecke der permanenten Integritäts-Überwachung während jedes Produktionszyklus erst im Produktstrom stromab der Membraneinheit zugesetzt wird. Denn obwohl, wie konventionell, vor jedem Produktionszyklus ein Integritätstest einer Membraneinheit durchgeführt wird, bleibt dennoch während des Produktionszyklus die Gefahr einer Funktionsstörung aufrecht, die zu einer Kontamination führen kann, so dass kontaminiertes Sterilwasser zum Verbrauch freigegeben würde. Der Steril-Sensor erbringt jedoch den Sterilitätsnachweis während des Produktionszyklus und zumindest bis zum nächsten Integritätstest der Membraneinheit, so dass bei einer Funktionsstörung sofortige Gegenmaßnahmen eingeleitet werden können, d. h., dass z. B. die Produktionsanlage stillgesetzt wird, oder eine schadhafte Membraneinheit isoliert wird, oder der Produktstrom gegen Verbrauch gesperrt oder abgeleitet oder verworfen wird. Anstelle der Ultrafiltrationstechnologie kann auch eine andere Technologie eingesetzt werden, die Sterilwasser herstellen lässt, denn der Steril-Sensor ist unabhängig von der eingesetzten Technologie nur im Produktstrom aktiv, um den ordnungsgemäßen Betrieb der Produktionsanlage zu überwachen und zu bestätigen.

Verfahrensgemäß wird besonders zweckmäßig als Desinfektionsmittel Ozon dem produzierten Sterilwasser zugesetzt, weil sich die Konzentrationsabnahme von Ozon präzise messen lässt, und Ozon in Wasser keine kritische Belastung darstellt, ohnedies zerfällt oder leicht beseitigbar ist. Jedoch sind auch andere Desinfektionsmittel, wie beispielsweise Chlordioxid, Wasserstoffperoxid oder Singulett-Sauerstoff, und andere brauchbar. Gegebenenfalls werden sogar Desinfektionsmittel-Kombinationen zugegeben.

Die Überwachung zumindest der Funktionsfähigkeit der Produktionsanlage erfolgt verfahrensgemäß zweckmäßig mit einem der Produktanlage direkt im Produktstrom nachgeschalteten, die Sterilität online ermittelnden Steril-Sensor, der die Abnahme der Konzentration des Desinfektionsmittels im Produktstrom präzise feststellt, und z. B. bei einer auf eine Funktionsstörung reagierenden, signifikanten Konzentrationsabnahme gut auswertbar anspricht.

Verfahrensgemäß wird ferner zweckmäßig das mit dem Desinfektionsmittel versetzte Sterilwasser durch eine Venrveilzeitstrecke geführt und werden die Desinfektionsmittel-Konzentrationen vor und nach der Verweilzeitstrecke gemessen. Die Verweilzeitstrecke führt zu einer aussagefähigen Konzentrationsabnahme, die sich zuverlässig messen lässt. Beispielsweise spricht der Steril-Sensor nur auf eine signifikante Konzentrationsabnahme an, (z. B. auf das Erreichen eines Schwellenwerts), so dass die Produktion bei Nichtansprechen des Steril-Sensors permanent fortgesetzt werden kann. Die Produktion kann sofort abgebrochen werden, oder eine Gegenmaßnahme kann eingeleitet werden, wenn der Sterilitätsnachweis durch den Steril-Sensor nicht erbringbar ist. Das Ansprechen des Steril-Sensors kann alternativ sogar verwendet werden, die Zugabekonzentration zu erhöhen, bis der Steril-Sensor den Sterilitätsnachweis zu erbringen vermag, weil dann die desinfizierende Wirkung des Desinfektionsmittels zumindest bei einer kleineren Funktionsstörung in der Produktionsanlage letztendlich die Sterilität des Sterilwassers garantiert und Funktionsstörung sozusagen kompensiert. So kann die Produktion z.B. zumindest bis zum nächsten Integritätstest fortgesetzt werden.

Verfahrensgemäß wird besonders zweckmäßig als Messwert im Produktstrom die Halbwertszeitreduzierung der Desinfektionsmittel-Konzentration, z.B. des Ozons, ausgewertet, weil diese Halbwertszeitreduzierung nicht nur ein sehr genaues Messresultat liefert, sondern auch gut abgreifbar ist.

Um den Sterilitätsnachweis mit hoher Zuverlässigkeit erbringen zu können, werden zweckmäßig nicht nur die Desinfektionsmittel-Konzentration nach oder bei Zugabe und die Desinfektionsmittel-Konzentration nach der Verweilzeitstrecke gemessen und ausgewertet, sondern wird z. B. auch der Ausgangszustand des produzierten Sterilwassers vor Zugabe des Desinfektionsmittels gemessen und ausgewertet, und wird auch der Produktstrom gemessen, d. h. der Volumenstrom, um das Verfahren z.B. jeweils trotz Produktionsschwankungen validisiert und/oder kalibriert durchführen zu können.

Die Konzentration des Desinfektionsmittels kann relativ gering sein, um den Sterilitätsnachweis zuverlässig erbringen zu können. Dies bedeutet, dass das Desinfektionsmittel, z. B. Ozon, gegebenenfalls im Sterilwasser verbleiben kann, weil es sich entweder ohnedies zersetzt oder keine Nachteile bedeutet bzw. unter gesetzliche Grenzwerte fällt. Jedoch ist verfahrensgemäß auch möglich, vor Freigabe des Produktstroms zum Verbrauch Desinfektionsmittelreste zu vernichten oder zumindest weitgehend zu entfernen.

Wenn als Desinfektionsmittel Ozon benutzt wird, dann kann dieses mittels eines Ozon-Generators erzeugt werden, oder aus einer anderen Ozonquelle stammen. Zweckmäßig wird Ozon inline oder im Nebenstrom oder in einem Kreislaufstrom mittels eines Ozon-Generators erzeugt, der mit Elektroden im Sterilwasser aus den Wassermolekülen Ozon erzeugt, oder aus Luft oder Sauerstoff, z. B. durch Ultraviolett-Licht- oder Corona-Entladung.

Um die Produktionsanlage nach Auftreten und Feststellen eines nur geringfügigen Schadens oder einer kleineren Funktionsstörung weiter betreiben zu können, z.B. zumindest bis zum nächsten Integritätstest einer Membraneinheit, kann die Zugabe-Konzentration des Desinfektionsmittel an durch nicht mehr ausreichende Sterilität der Produktionsanlage entstehende Erfordernisse in Sensibilitätsstufen angepasst werden. Dies kann, vorzugsweise, zur Kompensation der nicht mehr ausreichenden Sterilität der Produktionsanlage durch die Zugabe des Desinfektionsmittels entsprechend eines über der Steril-Sensor erstellten Validisierungsprotokolls erfolgen. In diesem Fall erfolgt die Zugabe des Desinfektionsmittels nicht nur zum permanenten Erbringen des Sterilitätsnachweises, sondern auch zum Abtöten von Mikroorganismen oder Keimen in einem begrenzten Ausmaß ("Hosenträger-Funktion"). Die Ausstattung mit dem Steril-Sensor und der Desinfektionsmittel-Zugabevorrichtung primär zum permanenten Erbringen des Sterilitätsnachweises ist von sich aus, gegebenenfalls nach geringfügigen Modifikationen, auch für diese Zusatzfunktion brauchbar.

In der Produktionsanlage ist für den Produktstrom eine Verweilzeitstrecke vorgesehen, die sicherstellt, dass das zugegebene Desinfektionsmittel längere Zeit in dem Produktstrom verweilen muss. Im Bereich des Beginns der Verweilzeitstrecke ist eine Zugabevorrichtung für das Desinfektionsmittel vorgesehen. Der Steril-Sensor weist stromab der Verweilzeitstrecke einen Desinfektionsmittel-Endkonzentrationssensor auf, und, vorzugsweise, stromauf der Verweilzeitstrecke einen Sensor zum Detektieren des Ausgangszustands des produzierten Sterilwassers, und/oder einen Volumenstrommesser für den Produktionsstrom. Der Volumenstrommesser ist beispielsweise stromauf des Desinfektionsmittel-Endkonzentrationssensors platziert. Diese Sensorkombination und auch der Volumenstrommesser ermöglichen eine genaue Kalibrierung des Steril-Sensors, falls beispielsweise der Produktstrom variieren sollte.

Damit die jeweilige Zugabekonzentration bekannt und bei der Messung berücksichtigbar ist, ist entweder die Zugabevorrichtung als geregelte Dosiervorrichtung ausgebildet, die eine genau bestimmbare und somit bekannte Konzentration einbringt, oder ist im Bereich des Beginns der Verweilzeitstrecke und stromab der Zugabevorrichtung ein Desinfektionsmittel-Anfangskonzentrationssensor vorgesehen, dessen Messresultat dem Desinfektionsmittel-Endkonzentrationssensor als Referenz dienen kann.

Der im Produktstrom der Produktionsanlage vorgesehene Steril-Sensor greift zweckmäßig als Messwert die Halbwertszeitreduzierung der Desinfektionsmittel-Konzentration ab. Lange Standzeiten und hohe Messsicherheit gewährleistet der Steril-Sensor, wenn der jeweilige Desinfektionsmittel-Konzentrationssensor, vorzugsweise im Fall von Ozon als zugegebenes Desinfektionsmittel, entsprechend eines Messprinzips einer elektrochemischen Reaktion ausgebildet ist, wobei eine Beaufschlagung mit elektrischem Strom oder elektrischer Spannung erfolgt, z. B. durch eine Membrane, an deren Stromabseite ein Elektrolyt und ein Elektrodenpaar angeordnet sind. Alternativ könnte hierzu auch ein Inline-Ultraviolett-Prozessfotometer verwendet werden, mit dem als Messgröße die charakteristische Wellenlänge von gelöstem Ozon und/oder deren Intensität präzise abgreifbar ist bzw. sind.

Die Zugabevorrichtung kann einen mit Elektroden entweder direkt inline oder im Nebenstrom oder im Kreislaufstrom entweder mit Wassermolekülen-Elektroden oder über Luft- oder Sauerstoff-Ultraviolett- oder Corona-Entladung betreibbaren Ozongenerator aufweisen. Zum Zugeben des erzeugten Ozons, oder auch für ein anderes Desinfektionsmittel, kann eine T-Stück-Einkopplung oder ein Venturidüseninjektor oder eine Sonde in den Produktstrom eingreifen, um Ozon in möglichst gleichmäßiger Verteilung einzubringen.

Die vorgesehene Verweilzeitstrecke kann eine Rohrstrecke mit definiertem Rohrquerschnitt sein. Dieser Rohrquerschnitt kann, vorzugsweise, mit definiertem, bestimmten Mischphasen ausgebildet sein. Der Rohrquerschnitt ist, zweckmäßig, größer als die Rohrquerschnitte in weiteren Produktionsstrom-Rohrleitungen der Produktionsanlage. Hingegen kann, vorzugsweise, zumindest an der Messstelle jedes Desinfektionsmittel-Konzentrationssensors jeweils ein vorbestimmter repräsentativer Querschnitt gewählt werden, der kleiner ist als der Rohrquerschnitt in der Rohrstrecke.

Unter der Voraussetzung, dass die Produktionsanlage eine Ultrafiltrationsanlage mit zumindest einer Membraneinheit ist, weist die Membraneinheit eine Integritätstestvorrichtung auf, mit der vor und nach jedem Produktionszyklus dieser Membraneinheit bei einer Betriebsunterbrechung, gegebenenfalls in Verbindung mit einem durch ein vorgesehenes Rückspülsystem ausgeführten Rückspülzyklus, ein Integritätstest durchgeführt wird, der bestätigt, ob die Membraneinheit bei Beginn des folgenden Produktionszyklus funktionsfähig ist oder nicht. Spätestens bei diesem Integritätstest wird festgestellt, ob die Membraneinheit zur Zeit noch funktionsfähig ist. Trat vorher bereits eine Funktionsstörung in der Membraneinheit auf, dann wurde diese bereits vorher durch den Steril-Sensor festgestellt und wurde eine Gegenmaßnahme eingeleitet. Aus diesem Grund sollte der Steril-Sensor zumindest stromab einer oder mehrerer parallel betriebener Membraneinheiten während jedes Produktionszyklus betreibbar sein. Natürlich ist auch ein permanenter Betrieb des Steril-Sensors möglich. Dann könnten gegebenenfalls zumindest manchmal Integritätstests und deren Zeitaufwand unterlassen bzw. eingespart werden. Gegebenenfalls wird eine Betriebsunterbrechung für einen Integritätstest genutzt, den Steril-Sensor zu aktualisieren oder neu zu kalibrieren.

Um besonders hohen Sterilitätsanforderungen gerecht zu werden, kann es ferner zweckmäßig sein, zumindest den jeweiligen Desinfektionsmittel-Konzentrationssensor redundant auszubilden, d. h., entweder doppelt und umschaltbar oder selbstüberprüfend, oder redundant jeweils mindestens zwei Sensoren vorzusehen, zwischen denen umgeschaltet wird, falls bei einem eine Funktionsstörung auftreten sollte.

Der Produktionsanlage ist zweckmäßig eine computerisierte Steuereinrichtung zugeordnet, die die Messungen vornimmt und die entsprechenden Betriebskommandos generiert, bzw. Alarmsignale akustisch oder optisch abgibt, zweckmäßig ein Protokoll aufzeichnet, aus dem sich beispielsweise bei einer Ultrafiltrationsanlage die Notwendigkeit einer Generalreinigung ermitteln lässt, und andere Betriebsstörungen in der Häufigkeit oder Frequenz, z.B. im Hinblick auf Produktanlagen-Modifikationen, auswertbar sind.

Anhand der Zeichnung werden eine Ausführungsform einer Produktionsanlage zum Herstellen von Sterilwasser sowie ein Herstellverfahren beschrieben.

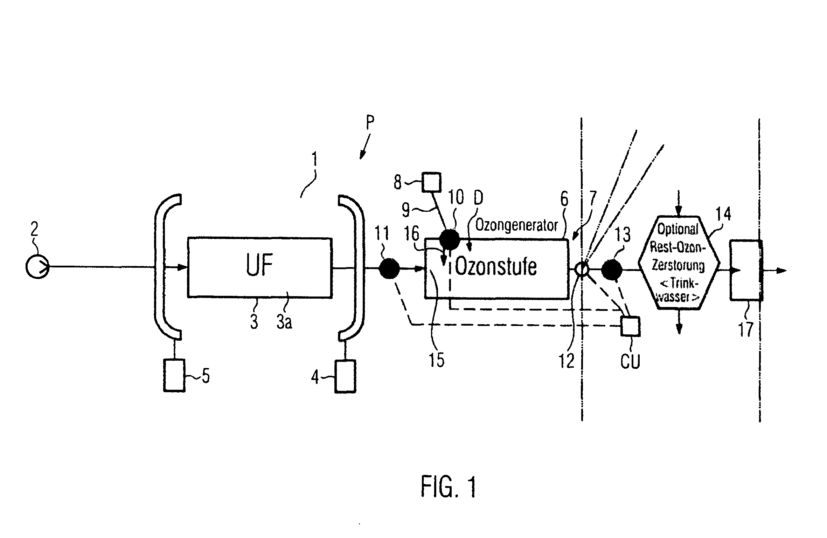

Fig. 1 ist eine schematische Darstellung einer Produktionsanlage.

Fig. 1 verdeutlicht schematisch eine in diesem Aufführungsbeispiel erhitzungsfrei betriebene Produktionsanlage P zum Herstellen von Sterilwasser. Unter Sterilwasser wird hier tatsächlich steriles Wasser, wie es beispielsweise in der Getränkeindustrie zur Getränkeherstellung, bei der Abfüllung, bei der Reinigung, oder in der Verpackungsindustrie in Prozessen verbraucht wird, aber auch um Trinkwasser, Tafelwasser oder dgl. verstanden, d.h., aus Rohwasser durch einen Reinigungsprozess hergestelltes reines Wasser im weiteren Sinn. Allgemein spielt bei der Sterilwasserherstellung die permanente Beurteilung des sterilen Zustands bzw. der ordnungsgemäßen Funktion der Produktionsanlage P eine wichtige Rolle, beispielsweise für einen aseptischen Füllprozesses in der Getränkeindustrie, wo beispielsweise in einem Rinser fortwährend steriles Wasser benötigt wird. Unter anderem geht es dabei um Produktionsraten von beispielsweise 5 bis 15 m³/h und Flussgeschwindigkeiten von etwa 1,0 m/s.

Als Alternative zum vor allem energieaufwändigen UHT-Herstellungsverfahren in Produktionsanlagen unter Einsatz von Hitze werden zunehmend alternative Produktionsanlagen für Sterilwasser in Betracht gezogen. Hierzu werden meist Sterilfilter eingesetzt, d. h. Membranfiltereinheiten mit Membranen mit Porengrößen um etwa 0,2 bis 0,45 µm, oder sogar mit Porengrößen von nur etwa 0,02 µm, abhängig vom Anwendungsbereich des Sterilwassers und von der letztendlich benötigten Keimreduzierung. Da im Getränkebereich in Frage kommende Keime Größen um etwa 0,5 µm bis 1,0 µm haben, sind in der Regel Membranen mit Porengrößen von etwa 0,2 µm ausreichend. Statistisch ist die Herstellung mit Porengrößen um etwa 0,02 µm jedoch sicherer. Alternativ können solche betriebene Produktionsanlagen P für Sterilwasser auch andere Technologien als die Ultrafiltrationstechnologie nutzen, so auch die UHT-Technologie.

Im Falle der Ultrafiltrationstechnologie können die eingesetzten Membranen als Hohlfasern, Platten oder Wickelmembranen ausgebildet sein. Die Membranmaterialien können unterschiedliche Kunststoffe umfassen wie beispielsweise Polyethersulfon, oder Keramik, Sintermetalle, etc. In der Ultrafiltrationstechnologie wird konventionell der korrekte Betriebszustand der Produktionsanlage bzw. der Membranen durch den sogenannte Integritätstest vor und, wenn gewünscht, auch nach einem Produktionszyklus überprüft. Dabei wird mittels Druckluft, z. B. Sterilluft, in einem festgelegten Druckbereich nach dem Prinzip des "Bubble-Point"-Tests die Luftdurchlässigkeit der benetzten Membran bestimmt. Die überwachte, sich einstellende Druckdifferenz (Transmembrandruck) sowie deren Abnahme über ein festgelegtes charakteristisches Zeitintervall ist ein aussagefähiges Indiz für die Integrität bei der jeweils vorhandenen Porengröße der benetzten Membrane. Dieser Test reagiert sehr empfindlich auf defekte Membranen (Membranenbruch). Der Integritätstest erfordert ein Auskoppeln der jeweils dem Integritätstest zu unterwerfenden Membraneinheit bei mehreren parallel arbeitenden Membraneinheiten. Wird der Integritätstest nicht bestanden, bleibt die Membraneinheit beispielsweise ausgekoppelt. Der Integritätstest kann nur im Produktionsstillstand (Stillstand der Membraneinheit) durchgeführt werden, meist in Verbindung mit einem vorhergehenden Rückspülzyklus und/oder einem Reinigungszyklus oder Sterilisationszyklus. Ein Produktionszyklus dauert dann bis zum nächsten Integritätstest. Erst dann kann erneut der ordnungsgemäße Zustand überprüft werden. Dies bedeutet, dass während des Produktionszyklus keine Möglichkeit gegeben ist, eine sich nach dem letzten Integritätstest einstellende Funktionsstörung festzustellen, und dieser abzuhelfen oder eine Gegenmaßnahme einzuleiten. Der Produktionszyklus wird bisher, mit anderen Worten, auf Vertrauen gefahren, d. h., es wird vorausgesetzt, dass während des Produktionszyklus kein Schaden eintritt. Tritt jedoch ein Schaden ein, dann ist das produzierte Sterilwasser kontaminiert, und werden gegebenenfalls auch die Produktvolumina parallel arbeitender Membraneinheiten kontaminiert, und ist das kontaminierte Sterilwasser bereits in den Verbrauch gelangt, wenn beim nächsten Integritätstest der funktionsgestörten Membraneinheit eine Funktionsstörung festgestellt wird. In den Verbrauch gelangtes, kontaminiertes Sterilwasser zieht jedoch außerordentlich hohe Folgekosten und Gegenmaßnahmen nach sich. insofern ist der Vorteil, einer erhitzungsfrei betriebenen Produktionsanlage zur Herstellung von Sterilwasser stets mit der Gefahr verbunden, dass ein im jeweiligen Produktionszyklus auftretender Schaden kontaminiertes Sterilwasser in den Verbrauch gelangen lässt.

Erfindungsgemäß wird dieser Nachteil durch wenigstens einen Steril-Sensor 7 der Produktionsanlage P beseitigt, der direkt in Produktstrom zumindest während jedes Produktionszyklus automatisch die Sterilität überwacht und einen Sterilitätsnachweis erbringt, so dass bei Auftreten einer Funktionsstörung, die eine Kontamination mit sich zieht, sofort Gegenmaßnahmen einleitbar sind. Der Steril-Sensor 7 misst dabei eine Konzentrationsabnahme eines für den Sterilitätsnachweis dem Sterilwasser-Produktstrom zugegebenen Desinfektionsmittels D. Das Desinfektionsmittel D ist beispielsweise Ozon, obwohl auch Chlordioxid, Wasserstoffperoxid, Singluett-Sauerstoff oder ähnliche Desinfektionsmittel einzeln oder in Kombination verwendet werden könnten. Der Zweck des Desinfektionsmittels D besteht hier nicht wie in der üblichen Wasserreinigungstechnologie darin, Sterilität durch Abtöten von Mikroorganismen oder Keimen herzustellen, sondern eine Möglichkeit einer Online-Zustandsüberwachung des produzierten Sterilwassers und/oder der Produktionsanlage während eines Produktionszyklus zu schaffen. Der Steril-Sensor 7 kann dabei im Falle der Ultrafiltrationstechnologie jeweils einer Membraneinheit nachgeordnet sein, oder im Produktionsstrom mehrerer parallel betriebener Membraneinheiten.

In Fig. 1 ist die Produktionsanlage P mit einem hygienischen, sanitisierbaren Modul 1, z. B. mit einem Ultrafiltrationsmodul 3 mit zumindest einer Membraneinheit 3a ausgestattet, der mit Rohwasser über eine Pumpe 2 gespeist wird und Sterilwasser in einem Produktstrom 15 liefert. Dem Modul 1 bzw. 3 kann ein Rückspülsystem 5 sowie eine Integritätstestvorrichtung 4 zugeordnet sein. Ein Integritätstest wird meist so durchgeführt, dass von hinter der Membran Sterilluft an die Membran geführt und gehalten wird. Nur bei einem Defekt würde diese auf die Seite vor die Membran gelangen. Das Rückspülsystem 5, ggf. mit einer Pumpe und einem Reservoir, und die Integritätstestvorrichtung 4 werden vor und nach jedem Produktionszyklus benutzt, um beispielsweise die Membrane rückzuspülen, und dann mittels beispielsweise des Bubble-Point-Testes die Integrität zu überprüfen und zu bestätigen. Zumindest während des Produktionszyklus führt der Steril-Sensor 7 ggf. eine Validisierungs- und Kalibrierungsmessung durch, in dem er die Konzentrationsabnahme des zugegebenen Desinfektionsmittels D misst, überwacht und auswertet, die im Falle einer Kontamination signifikant stärker wird als in Sterilwasser einwandfreier Qualität.

Obwohl das Desinfektionsmittel D primär zur Zustandsüberwachung zugegeben und in seiner Konzentrationsabnahme gemessen wird, kann zusätzlich die desinfizierende Wirkung des zugegebenen Desinfektionsmittels genutzt werden, um im Falle einer nur minimalen Kontamination im Produktstrom den Produktionszyklus fortzuführen, beispielsweise, wenn an einer einzelnen Membrane ein kleiner Fehler eingetreten ist oder nur ev. möglicher schwacher Bewuchs mitgerissen wurde. Die Desinfektionswirkung des Desinfektionsmittels D kompensiert diese geringe Belastung, während weiterhin Sterilwasser ohne Belastung hergestellt wird. Es kann diese schwache Funktionsstörung beim nächsten Integritätstest behoben werden, oder es kann die Produktionsanlage P weiter betrieben werden, solange mittels des zugegebenen Desinfektionsmittels die notwendige Sterilität gewährleistet werden kann. Die Zugabe kann dabei gegebenenfalls erhöht werden. Es kann so durch exakte Desinfektionsmitteldosage der exakte keimfreie Zustand aber auch ein Zustand minimaler Belastung eingestellt werden. Der primäre Zweck der Desinfektionsmittel-Zugabe und Funktion des Steril-Sensors 7 ist jedoch die permanente Zustandsüberwachung während der Produktionszyklen.

In Fig. 1 wird der Produktstrom 15 aus dem Modul 1 bzw. 3 durch eine Verweilzeitstrecke 6 geführt, in deren Bereich der Steril-Sensor 7 platziert ist. In der gezeigten Ausführungsform ist im Bereich des Beginns der Verweilzeitstrecke 6 eine Zugabevorrichtung 9 für das Desinfektionsmittel D in den Produktstrom 15 vorgesehen, beispielsweise im Falle von Ozon ein Ozongenerator 8, der das erzeugte Desinfektionsmittel D beispielsweise über Einrichtungen 16, wie ein T-Stück, einen Venturidüsen-Injektor oder eine Sonde oder dergleichen, mit einer bestimmten Konzentration dem Produktstrom 15 zugibt. Im Falle von Ozon als das zugegebene Desinfektionsmittel D kann beispielsweise eine Konzentration von etwa 0,5 bis 1,0 ppm ausreichen, wobei die Verweilzeitstrecke 6 so ausgebildet ist, dass sie ein Zeitfenster von beispielsweise 120 s für den Produktionsstrom definiert. Nach dieser Zeitdauer erreicht das zugegebene Desinfektionsmittel D im Produktstrom 15 einen Desinfektionsmittel-Endkonzentrationssensor 13, der beispielsweise eine Empfindlichkeit von mindestens 0,01 ppm bis etwa 2,0 ppm aufweisen sollte. Die Zugabevorrichtung 9 kann als Dosiervorrichtung ausgebildet sein, die eine exakt bestimmte Konzentration des Desinfektionsmittels einbringt. Zusätzlich oder alternativ kann in diesem Bereich ein Desinfektionsmittel-Anfangskonzentrationssensor 10 eingesetzt werden, der die einbrachte Konzentration überprüft oder misst, und eine Referenz für den Endkonzentrationssensor 13. Die Messwerte der Sensoren 10, 13 werden ausgewertet, um die Konzentrationsabnahme zu detektieren (Konzentrationsdifferenzmessung).

Die Verweilzeitstrecke 6 kann z. B. als Rohrstrecke oder Strömungstrecke mit definiertem Rohrquerschnitt ausgebildet sein und definierte bestimmbare Mischphasen enthalten. Sind diese Mischphasen ausreichend bestimmt, dann kann die Verweilzeitstrecke 6 auch einen größeren Querschnitt als sonstige Produktrohrleitungen der Produktionsanlage P haben. Wichtig ist jedoch, dass an den jeweiligen Messstellen zumindest der Sensoren z. B. 10, 13 ein repräsentativer Querschnitt für den jeweiligen Sensor eingehalten ist. Das heißt, ein im Bereich des jeweiligen Sensors vorgesehenes Rohrstück kann einen geringeren Querschnitt aufweisen als den Rohrquerschnitt in der Verweilzeitstrecke 6. Dabei ist wichtig, dass die Sensoren 10, 13 nicht in einer Bypassleitung positioniert sind, sondern direkt im Produktstrom 15.

Zusätzlich umfasst der Steril-Sensor 7 in einer zweckmäßigen Ausführungsform einen Sensor 11 beispielsweise stromauf der Verweilzeitstrecke 6 zur Bestimmung des Sterilwasser-Ausgangszustandes sowie beispielsweise im Bereich des Endes der Verweilzeitstrecke 6 einen Volumenstrommesser 12. Im Anschluss an den Steril-Sensor 7 kann ferner eine Einrichtung 14 zum Zerstören von Desinfektionsmittel-Resten vorgesehen sein, und/oder ein Zwischenspeicher 17, der mindestens das Produktionsvolumen vor Freigabe zum Verbrauch zwischenspeichert, das zumindest während der Ansprechzeit des Steril-Sensors 7 hergestellt worden ist. Denn im Falle beispielsweise von Ozon als das Desinfektionsmittel D haben die eingesetzten Sensoren 10, 13 üblicherweise eine Ansprechzeit von etwa 30 bis 60 s, so dass ein aussagefähiges Resultat erst nach dieser Ansprechzeit vorliegt.

Die Verweilzeitstrecke 6 könnte im Übrigen auch ein Behälter sein.

Der Ozongenerator 8 erzeugt Ozon direkt aus den Wassermolekülen durch Elektrolyse oder aus Luft oder Sauerstoff beispielsweise mittels Ultraviolett-Licht oder Corona-Entladung. Die Konzentrationsdifferenzmessung sollte im Produktstrom 15 durchgeführt werden, da eine Messung in einem Bypass zu einem beispielsweise sogar logarithmischen Fehler führen würde. Die Sensoren, d. h. zumindest die Sensoren 10, 13 können redundant ausgestattet oder ausgebildet werden und deren Messwerte plottbar sein, so dass die Produktionsanlage P auch FDAtauglich ist.

Zumindest die Anfangs- und Endkonzentrationssensoren 10, 13 basieren, beispielsweise im Fall von Ozon als Desinfektionsmittel D, auf einem Messprinzip, das entweder eine elektrochemische Reaktion nutzt, bei der durch eine Membrane Strom zugeführt wird und sich hinter der Membrane ein Elektrolyt und ein Elektrodenpaar befindet. Auch sind Inline-Ultraviolett-Prozessphotometer als die Sensoren 10, 13 brauchbar. Diese arbeiten auf der Basis von Absorption. Die charakteristische Wellenlänge von gelöstem Ozon und deren Intensität werden als charakteristische Messgröße für die Ozonkonzentration abgegriffen.

Unter anderem auch durch Verwenden der Messresultate der weiteren Sensoren 11, 10 und des Volumenstrommessers 12 ergibt sich in kalibriertem Ausgangszustand des Steril-Sensors 7 eine konstante Abnahme der Konzentration des Desinfektionsmittels. Diese Abnahme ist im Produktstrom 15, insbesondere bei Ozon, stets vorhanden, und bei gleichbleibender Rohwasserqualität und einwandfreier Funktionsfähigkeit der Produktionsanlage weitestgehend konstant. Im Falle einer groben Kontamination verstärkt sich der Zerfall des Desinfektionsmittels D, d. h. die Halbwertszeit beim Abbau der Ozonkonzentration nimmt ab. Der Steril-Sensor 7 spricht darauf an und gibt beispielsweise Alarm oder veranlasst den Abbruch des Produktionszyklus oder das Verwerfen des produzierten Sterilwassers. Eine grobe Veränderung bedeutet nämlich einen signifikanten Membranbruch oder Modulfehler oder auch ein sich lösendes, bisher nicht feststellbares Nest an Mikroorganismen oder Keimen und bedingt sofortige Gegenmaßnahmen. Wie erwähnt, kann eine minimale Kontamination durch die Zugabe oder gesteigerte Zugabe des Desinfektionsmittels zumindest einige Zeit kompensiert werden.

Im Falle von Ozon als das Desinfektionsmittel zerfällt dieses gemäß seiner Halbwertszeit, oder wird dies in der Einrichtung 14 vernichtet oder abgeführt, so dass kein Ozon-Rückstand im Sterilwasser verbleibt.

Im Grunde genommen wird der Steril-Sensor 7 auf der Basis einer Messung der Halbwertszeit-Konzentrationsreduzierung des zugegebenen Desinfektionsmittels D betrieben. Unterstützt durch die weiteren Komponenten (11, 10 und 12) kann der Steril-Sensor 7 eine Validisierungs-und Kalibrierungsmessung durchführen, die eine außerordentlich aussagefähige Beurteilung des Zustands des produzierten Sterilwassers und/oder der Produktionsanlage P im laufenden Produktionszyklus ermöglicht. Die Halbwertszeitbestimmung weist nur minimalste Abweichungen auf, und keine signifikanten Abweichungen. Dies ist für die ordnungsgemäße Zustandsüberwachung des laufenden Produktionszyklus jedoch nicht schlimm, da der Zustand der Membraneinheit 3a vor Beginn des Produktionszyklus bereits bei dem durchgeführten Integritätstest als intakt festgestellt wurde. Es muss demzufolge nur das Produktionsvolumen an Sterilwasser während des Produktionszyklus bis zum nächsten Rückspülzyklus oder Integritätstest sichergestellt werden. Der nächste Integritätstest beurteilt und bestätigt den Zustand der Membranfunktionsfähigkeit erneut, worauf neue Maßnahmen eingeleitet werden können.

## Patentansprüche

1. Verfahren zum Herstellen von Sterilwasser aus Rohwasser während eines Produktionszyklus in einer Produktionsanlage (P), **dadurch gekennzeichnet, dass** während des Produktionszyklus zur permanenten Sterilwasser- und/oder Produktionsanlagen-Zustandsüberwachung dem produzierten Sterilwasser unabhängig davon, ob es steril oder kontaminiert ist, laufend ein Desinfektionsmittel (D) zugegeben und direkt im Produktstrom (15) eine Konzentrationsabnahme des zugegebenen Desinfektionsmittels ermittelt und dahingehend ausgewertet wird, ob eine gegenüber einer vorbestimmten Konzentrationsabnahme bei steril produziertem Sterilwasser signifikantere Konzentrationsabnahme eine Funktionsstörung der Produktionsanlage (P) anzeigt.

2. Verfahren nach Anspruch 1, **dadurch gekennzeichnet, dass** das Sterilwasser erhitzungsfrei durch Ultrafiltration in wenigstens einer Membraneinheit (3a), hergestellt wird.

3. Verfahren nach Anspruch 1, **dadurch gekennzeichnet, dass** als Desinfektionsmittel (D) Ozon oder Chlordioxid, Wasserstoffperoxid oder Singulett-Sauerstoff zugegeben wird.

4. Verfahren nach Anspruch 1, **dadurch gekennzeichnet, dass** die Überwachung mit einem der Produktanlage (P) im Produktstrom (15) nachgeschalteten, die Sterilität online ermittelten Steril-Sensor (7) durchgeführt wird.

5. Verfahren nach Anspruch 1, **dadurch gekennzeichnet, dass** das mit dem Desinfektionsmittel (D) versetzte Sterilwasser durch eine Verweilzeitstrecke (6) geführt wird, dass die Desinfektionsmittel-Konzentrationen vor und nach der Verweilzeitstrecke (6) gemessen, und/oder eine Desinfektionsmittel-Konzentrationsdifferenz ermittelt und ausgewertet werden, und dass der Produktionszyklus entweder bei erbrachtem Sterilitätsnachweis fortgesetzt wird, oder wegen nichterbrachtem Sterilitätsnachweis die Zugabe-Konzentration erhöht wird, bis der Sterilitätsnachweis erbringbar ist, oder wegen nicht erbringbarem Sterilitätsnachweis abgebrochen wird.

6. Verfahren nach wenigstens einem der vorhergehenden Ansprüche, **dadurch gekennzeichnet, dass** als Messwert im Produktstrom (14) die Halbwertszeitreduzierung der Konzentration des Desinfektionsmittels (D) ausgewertet wird.

7. Verfahren nach wenigstens einem der vorhergehenden Ansprüche, **dadurch gekennzeichnet, dass** die Desinfektionsmittel-Konzentration nach oder bei Zugabe, nach der Verweilzeitstrecke (6), und, vorzugsweise, der Ausgangszustand des produzierten Sterilwassers vor Zugabe des Desinfektionsmittels (D) sowie der Produktstrom (15) gemessen und ausgewertet werden.

8. Verfahren nach wenigstens einem der vorhergehenden Ansprüche, **dadurch gekennzeichnet, dass** vor Freigabe des Produktstromes (15) zum Verbrauch Desinfektionsmittel-Reste beseitigt bzw. unter einen Grenzwert gebracht werden.

9. Verfahren nach Anspruch 3, **dadurch gekennzeichnet, dass** als Desinfektionsmittel (D) Ozon vorzugsweise inline oder im Nebenstrom oder in einem Kreislaufstrom mittels eines Ozon-Generators (8) durch Elektroden im Sterilwasser oder aus Luft oder Sauerstoff z. B. durch Ultraviolett-Licht oder Corona-Entladung erzeugt und, zugegeben wird.

10. Verfahren nach wenigstens einem der vorhergehenden Ansprüche, **dadurch gekennzeichnet, dass** die Zugabe-Konzentration des Desinfektionsmittels (D) in Sensibilitätsstufen angepasst an durch nicht mehr ausreichende Sterilität der Produktionsanlage (P) entstehende Erfordernisse einstellbar ist, vorzugsweise zur Kompensation der nicht mehr ausreichenden Sterilität der Produktionsanlage (P) durch das Desinfektionsmittel entsprechend Anforderungen eines über den Steril-Sensor (7) erstellten Validisierungsprotokolls.

11. Produktionsanlage (P) zum Herstellen von Sterilwasser, **dadurch gekennzeichnet, dass** direkt im Sterilwasser-Produktstrom (15) ein Steril-Sensor (7) zur Sterilwasser- und/oder Produktionsanlagen-Zustandsüberwachung während eines Produktionszyklus vorgesehen ist, mit dem permanent eine Konzentrationsabnahme eines dem produzierten Sterilwasser unabhängig davon zugesetzten Desinfektionsmittels (D) messbar und im Hinblick auf Erbringen eines eine Funktionsstörung der Produktionsanlage (P) ausschließenden Sterilitätsnachweises auswertbar ist, ob das Sterilwasser steril oder kontaminiert produziert ist.

12. Produktionsanlage (P) nach Anspruch 11, **dadurch gekennzeichnet, dass** die Produktionsanlage (P) wenigstens einen Ultrafiltrationsmodul (1, 3) mit wenigstens einer Membraneinheit (3a) aufweist.

13. Produktionsanlage nach Anspruch 11, **dadurch gekennzeichnet, dass** für den Produktstrom (15) bei dem Steril-Sensor (7) eine Verweilzeitstrecke (6) vorgesehen ist, dass im Bereich des Beginns der Verweilzeitstrecke eine Zugabevorrichtung (9) für das Desinfektionsmittel (D), vorzugsweise Ozon, Chlordioxid, Wasserstoffperoxid oder Singulett-Sauerstoff vorgesehen ist, und dass der Steril-Sensor (7) einen Desinfektionsmittel-Endkonzentrationssensor (13) stromab der Verweilzeitstrecke (6), und, vorzugsweise, einen Sensor (11) zur Detektion des Ausgangszustandes des produzierten Sterilwassers stromauf der Verweilzeitstrecke (6) und/oder einen Volumenstrommesser (12) für den Produktionsstrom (15) umfasst, der, vorzugsweise, stromauf des Desinteküonsmittel-Endkonzentrationssensors (13) platziert ist.

14. Produktionsanlage nach Anspruch 13, **dadurch gekennzeichnet, dass** entweder die Zugabevorrichtung (9) als Dosiervorrichtung für das Desinfektionsmittel (D) ausgebildet und/oder im Bereich des Beginns der Verweilzeitstrecke (6) ein Desinfektionsmittel-Anfangskonzentrationssensor (10) vorgesehen ist.

15. Produktionsanlage nach Anspruch 13, **dadurch gekennzeichnet, dass** der jeweilige Desinfektionsmittel-Konzentrationssensor (10, 13), vorzugsweise im Falle von Ozon als Desinfektionsmittel (D), entsprechend eines Messprinzips einer elektrochemischen Reaktion betreibbar ist, die durch eine Membrane mit elektrischem Strom beaufschlagt wird, an deren Stromabseite ein Elektrolyt und ein Elektrodenpaar angeordnet sind, oder als Inline-UV-Prozessfotometer ausgebildet ist, mit dem als Messgröße die charakteristische Wellenlänge von gelöstem Ozon-und/oder deren Intensität abgreifbar ist.

16. Produktionsanlage nach Anspruch 13, **dadurch gekennzeichnet, dass** die Zugabevorrichtung (9) einen mit Elektroden entweder direkt inline oder im Nebenstrom oder im Kreislaufstrom entweder mit Wassermolekül-Elektroden oder über Luft- oder Sauerstoff-Ultraviolettlicht- oder Corona-Entladung betreibbaren Ozon-Generator (8) aufweist, sowie, vorzugsweise, eine T-Stück-Einkopplung oder einen Venturidüseninjektor oder eine Sonde (14) zur Zugabe von Ozon in den Produktstrom (15).

17. Produktionsanlage nach Anspruch 13, **dadurch gekennzeichnet, dass** die Verweilzeitstrecke (6) eine Rohrstrecke mit definiertem Rohrquerschnitt, und, vorzugsweise, definierten, bestimmten Mischphasen ausgebildet ist, vorzugsweise mit größerem Rohrquerschnitt als weitere Produktstrom-Rohrleitungen der Produktionsanlage (P), und dass, vorzugsweise zumindest an der Messstelle jedes Desinfektionsmittel-Konzentrationssensors (10, 13) jeweils ein vorbestimmter repräsentativer Querschnitt kleiner als der Rohrquerschnitt in der Rohrstrecke vorgesehen ist.

18. Produktionsanlage nach wenigstens einem der vorhergehenden Ansprüche, **dadurch gekennzeichnet, dass** der zumindest eine Membraneinheit (3a) enthaltende Ultrafiltrationsmodul (1, 3) eine Integritätstestvorrichtung (4) aufweist, mit der vor und nach jedem Produktionszyklus bei einer Betriebsunterbrechung, gegebenenfalls in Verbindung mit einem durch ein vorgesehenes Rückspülsystem (5) ausgeführten Rückspülzyklus, ein Membranen-Integritätstest durchführbar ist, und dass, vorzugsweise, der einer oder mehreren parallelen Membraneinheiten (3a) oder Ultrafiltrations-Modulen (1) nachgeordnete Steril-Sensor (7) zur Zustandsüberwachung zumindest während jedes Produktionszyklus betreibbar ist.

19. Produktionsanlage nach wenigstens einem der vorhergehenden Ansprüche, **dadurch gekennzeichnet, dass** zumindest der jeweilige Desinfektionsmittel-Konzentrationssensor (10, 13) redundant ausgebildet oder redundant angeordnet ist.
